# EUROPÄISCHE PATENTANMELDUNG

(11) **EP 4 725 919 A1**
(43) Veröffentlichungstag der Anmeldung: **15.04.2026**
(21) Anmeldenummer: 25203711.4
(22) Anmeldetag: 22.09.2025
(51) Int. Cl.: C03B 9/16, C03B 9/193

(54) **STATION FÜR EINE GLASFORMMASCHINE**

(30) Priorität: 30.09.2024 DE 202024105639 U
(71) Anmelder: T&T Turnov s.r.o., 51101 Turnov (CZ)
(72) Erfinder: Themann, Rolf, 51101 Turnov (CZ); Titlbach, Filip, 51212 Jesenný (CZ)
(74) Vertreter: Moser Götze & Partner Patentanwälte mbB

(57) **Zusammenfassung**

Eine Station (1) für eine Glasformmaschine, insbesondere für eine IS- oder ISX-Glasformmaschine, hat stationsseitige Anschlüsse (4), mittels denen die Station (1) an glasformmaschinenseitige Versorgungsleitungen od. dgl. anschließbar ist. Um zu ermöglichen, dass bei einer Störung an der Station (1) auftretende Einbußen hinsichtlich der Herstellungsmenge der Glasformmaschine erheblich vermindert werden können, wird vorgeschlagen, dass alle stationsseitigen Anschlüsse (4) mittels Schnellkupplungen von den ihnen zugeordneten Versorgungsleitungen od. dgl. abtrennbar sind und dass die Station (1) als Einheit aus der Glasformmaschine entnehmbar ist.

## Beschreibung

Die Erfindung bezieht sich auf eine Station für eine Glasformmaschine, insbesondere für eine IS- oder ISX-Glasformmaschine, mit stationsseitigen Anschlüssen, mittels denen die Station an glasformmaschinenseitige Versorgungsleitungen od. dgl. anschließbar ist.

Aus dem Stand der Technik bekannte derartige Stationen für Glasformmaschinen sind üblicherweise fest an den entsprechenden Sektionen oder Abschnitten der Glasformmaschine installiert. Sofern bei einer der an der Glasformmaschine installierten Stationen eine Störung auftritt, muss in jedem Fall diese störungsbehaftete Station stillgelegt werden. Um die betreffende Störung zu beseitigen, ist es jedoch häufig unerlässlich, aus Sicherheits- und Arbeitsschutzgründen auch die rechts und links neben der störungsbehafteten Station angeordneten Nachbarstationen stillzusetzen, da ansonsten für mit der Beseitigung der aufgetretenen Störung befasstes Personal das Risiko zu groß wäre, wegen des in den Nachbarstationen verarbeiteten heißen Glases und wegen sich bewegender Mechanismen der Nachbarstationen Verbrennungen oder ähnliche Verletzungen zu erleiden. Bei einer Glasformmaschine, in die zwölf Stationen integriert sind, heißt das, dass bei einer störungsbehafteten Station, die nicht am Rand der Glasformmaschine angeordnet ist, drei von zwölf Stationen außer Betrieb zu setzen sind. Hierdurch ergibt sich eine Reduktion der Herstellungsmenge einer Glasformmaschine um 25%.

Ausgehend von dem vorstehend geschilderten Stand der Technik liegt der Erfindung die Aufgabe zugrunde, eine Station für eine Glasformmaschine zur Verfügung zu stellen, bei deren Einsatz in einer Glasformmaschine die bei einer Störung an der Station auftretenden Einbußen hinsichtlich der Herstellungsmenge der Glasformmaschine erheblich vermindert werden können.

Diese Aufgabe wird erfindungsgemäß dadurch gelöst, dass bei einer Station für eine Glasformmaschine der eingangs geschilderten Bauart alle stationsseitigen Anschlüsse mittels Schnellkupplungen von den ihnen zugeordneten Versorgungsleitungen od. dgl. abtrennbar sind und dass die Station als Einheit aus der Glasformmaschine entnehmbar ist. Entsprechend kann die erfindungsgemäße Station, wenn bei ihr eine Betriebsstörung auftritt, innerhalb von Minuten von sämtlichen glasformmaschinenseitigen Versorgungsleitungen, Datenleitungen etc. abgetrennt und dann aus der Glasformmaschine entnommen werden.

Wenn die Station mittels Führungsrollen und Zentrierrollen in ihrer Betriebsstellung an einem Maschinenbett der Glasformmaschine positionierbar ist, kann eine korrekte Positionierung der Station in der Glasformmaschine und damit ein technisch einwandfreier Betrieb derselben ohne großen technisch-konstruktiven Aufwand beim Einschieben der Station in die Glasformmaschine sichergestellt werden.

Wenn zwischen der Station und der Glasformmaschine Lagerelemente angeordnet sind, mittels denen die Station, vorzugsweise um ca. 15 mm, anhebbar und auf denen die Station aus der Glasformmaschine herausziehbar ist, ergibt sich eine weitere Erleichterung bei der Entnahme einer defekten Station aus der Glasformmaschine.

Die Lagerelemente können vorteilhaft in Ausnehmungen, die im Maschinenbett der Glasformmaschine ausgebildet sind, sitzen und oberhalb des glasformmaschinenseitigen Maschinenbetts angeordnet werden, wenn die Entnahme einer defekten Station erforderlich ist.

Entsprechend sind gemäß einer vorteilhaften Weiterbildung der erfindungsgemäßen Station die Lagerelemente in den Ausnehmungen des glasformmaschinenseitigen Maschinenbetts zum Anheben und zum Absenken der Station verstellbar.

Eine weitere Vereinfachung ergibt sich, wenn die Lagerelemente mittels einer angetriebenen Verstellvorrichtung geregelt zwischen einer Ruhestellung, in der die Station in deren Betriebsstellung an der Glasformmaschine verriegelbar ist, und einer Betriebsstellung, in der die Station auf ihnen aus der Glasformmaschine herausnehmbar ist, verstellbar sind.

Um eine gleichmäßige Belastung des Maschinenbetts beim Entfernen und Einsetzen einer Station zu gewährleisten, ist es zweckmäßig, wenn die Ausnehmungen im glasformmaschinenseitigen Maschinenbett in zwei Reihen angeordnet sind, von denen jede einem Längsrandbereich der Unterseite der Station zugeordnet ist.

Eine weitere Vergleichmäßigung der Belastung des Maschinenbetts beim Einsetzen und Entnehmen einer Station wird erreicht, wenn die Ausnehmungen einer Reihe gleichbeabstandet zueinander angeordnet sind.

Als Lagerelemente können vorteilhaft Walzen-, Rollen- und/oder Zapfenlagerelemente vorgesehen sein.

Bei bestimmten Anforderungsprofilen an den Austausch von Stationen kann es sinnvoll sein, wenn die Lagerelemente manuell verstellbar sind.

Wenn die Verstellvorrichtung elektrisch, pneumatisch oder hydraulisch, vorzugsweise automatisch, antreibbar ist, ist es mit einem vergleichsweise geringen Aufwand möglich, auch den Betrieb der Verstellvorrichtung mittels der Steuervorrichtung der Glasformmaschine zu steuern und zu regeln.

Vorteilhaft ist die erfindungsgemäße Station mit einer Transportvorrichtung verbindbar, mittels der sie aus der Glasformmaschine entnehm- bzw. herausziehbar ist.

Der Austausch von Stationen an der Glasformmaschine kann weiter erleichtert werden, wenn mittels der vorzugsweise als spezielles Tiefladefahrzeug ausgebildeten Transportvorrichtung auch eine als Ersatz dienende andere Station in die Glasformmaschine lad- und einfügbar ist.

Zweckmäßigerweise ist die Station außerhalb der Glasformmaschine reparier- und wartbar und sind deren Bauteile außerhalb der Glasformmaschine auswechselbar. Mit der Auswechselung der Bauteile wird deren korrekte Positionierung in Bezug auf die Station und damit, sobald die Station in die Glasformmaschine eingefügt ist, in Bezug auf die Glasformmaschine vollzogen.

Wenn die Station an der Unterseite ihrer dem Maschinenbett zugewandten Bodenplatte zwei Längsnuten aufweist, in denen die am Maschinenbett der Glasformmaschine gehalterten Führungsrollen und Zentrierrollen aufnehmbar sind, kann die Station sowohl bei ihrer Entnahme aus der Glasmaschine als auch beim Einfügen in die Glasmaschine genau geführt werden, wobei darüber hinaus nach dem Einfügen der Station in die Glasmaschine eine korrekte Positionierung der Station in deren Betriebsstellung erleichtert ist.

Gemäß einer vorteilhaften Weiterbildung der erfindungsgemäßen Station ist diese mittels einer vorzugsweise am Maschinenbett der Glasmaschine angeordneten Spannvorrichtung am Maschinenbett befestigbar. Diese Spannvorrichtung hat zweckmäßigerweise zwei als Spannhebel ausgebildete Spanneinheiten, von denen eine auf der Vorformseite der Station und die andere auf deren Fertigformseite angeordnet ist und die einander vorzugsweise diagonal gegenüber liegen, die sich bei einer Störung an der Station leicht lösen lassen und mittels denen ggf. eine als Ersatz herbeigebrachte Station wenig aufwendig in ihrer Betriebsstellung verriegelbar ist.

Im Folgenden wir die Erfindung anhand einer Ausführungsform unter Bezugnahme auf die Zeichnung näher erläutert. Es zeigen:
Figur 1 eine perspektivische Darstellung einer Ausführungsform einer erfindungsgemäßen Station für eine Glasformmaschine oberhalb eines glasformmaschinenseitigen Maschinenbetts;
Figur 2 eine vergrößerte perspektivische Darstellung der in Figur 1 gezeigten Station für eine Glasformmaschine bei teilweise demontierter Abdeckung;
Figur 3 eine perspektivische Darstellung des Bodenbereichs einer weiteren der erfindungsgemäßen Station; und
Figur 4 eine perspektivische Darstellung des oberhalb des Maschinenbetts befindlichen Bodenbereichs der erfindungsgemäßen Station.

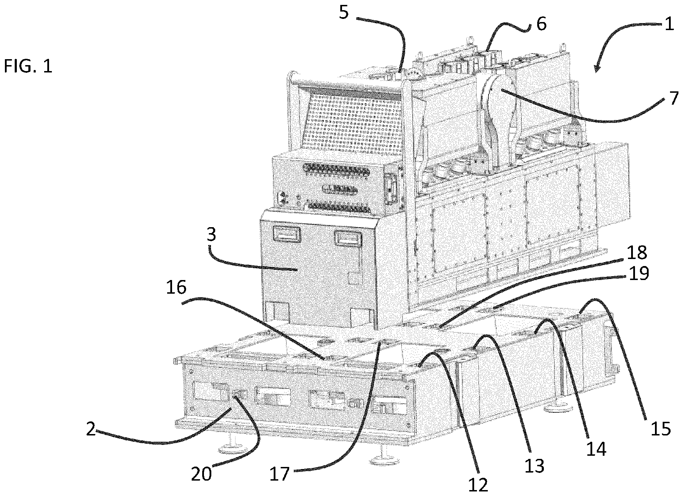

Eine erfindungsgemäße Ausführungsform einer Station 1 für eine Glasformmaschine ist in Figur 1 gemeinsam mit einem Bereich eines Maschinenbetts 2 der Glasformmaschine, die im Übrigen in den Figuren 1 bis 4 nicht gezeigt ist, in einer perspektivischen Darstellung gezeigt. Bei der Glasformmaschine, an der die Station 1 eingesetzt wird, kann es sich insbesondere um eine IS- oder eine ISX-Glasformmaschine handeln.

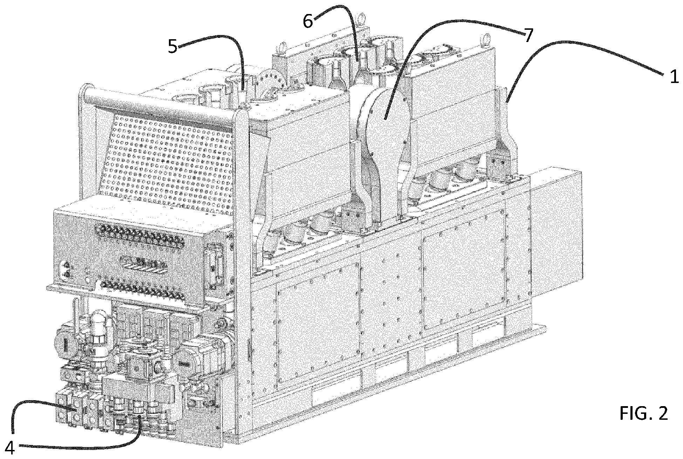

Die Station 1 hat, wie sich insbesondere aus Figur 2 ergibt, in der die Station 1 ohne ein in Figur 1 gezeigtes Gehäuseteil 3 dargestellt ist, stationsseitige Anschlüsse 4. Mittels dieser stationsseitigen Anschlüsse 4 ist die Station 1 an glasformmaschinenseitige Versorgungsleitungen, Datenleitungen od. dgl. anschließbar. Mittels dieser an die Anschlüsse 4 gekoppelten Versorgungsleitungen, Datenleitungen od. dgl. kann die Station 1 in ihrer Betriebsstellung auf dem Maschinenbett 2 der Glasformmaschine mit Strom, Druckluft, Unterdruck, Schmieröl, Kühlwasser etc. versorgt werden. Des Weiteren können im Betrieb der Station 1 anfallende Daten über die Datenleitungen an eine Steuervorrichtung der Glasformmaschine weitergeleitet werden, wobei auch diese Datenleitungen an stationsseitige Anschlüsse 4 angeschlossen sind. Mittels der stationsseitigen Anschlüsse 4 können Vorformen 5, Fertigformen 6, der Inverter 7 und andere Bauteile der Station 1 mit Strom, Druckluft, Unterdruck, Schmieröl, anderen Schmiermitteln, Kühlwasser etc. versorgt werden.

Alle stationsseitigen Anschlüsse 4 der Station 1 sind mit äußerst geringem Zeitaufwand von den Ihnen zugeordneten Versorgungs- und Datenleitungen der in den Figuren nicht gezeigten Glasformmaschine abtrennbar. Hierzu sind in den Figuren nicht explizit dargestellte Schnellkupplungen vorgesehen, mittels denen die glasformmaschinenseitigen Versorgungs- und Datenleitungen möglichst schnell mit den ihnen zugeordneten Anschlüssen 4 der Station 1 verbindbar und von ihnen lösbar sind.

Die in den Figuren 1 bis 4 gezeigte Station 1 ist als integrierte Baueinheit gestaltet und als solche von der Glasformmaschine abtrennbar und mit der Glasformmaschine zusammenfügbar.

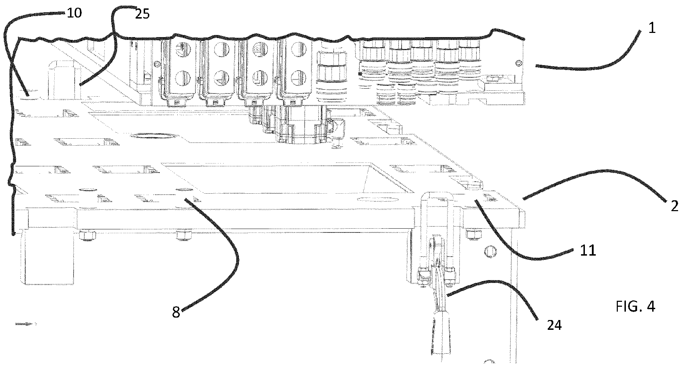

Um die Station 1 mit der Glasformmaschine zusammenzufügen, sind, wie insbesondere aus Figur 4 hervorgeht, im dargestellten Ausführungsbeispiel der Station 1 vier glasmaschinenseitige Führ- bzw. Zentriermittel 8, 9, 10, 11 vorgesehen. Hierbei handelt es sich um zwei in Einschubrichtung der Station 1 in die Glasmaschine vorne am Maschinenbett 2 der Glasmaschine gehalterte Führungsrollen 8, 11 und zwei in Einschubrichtung der Station 1 in die Glasmaschine hinten am Maschinenbett 2 der Glasmaschine gehalterte Zentrierrollen 9, 10, von denen in Figur 4 nur die Zentrierrolle 10 sichtbar ist. Mittels der beiden Führungsrollen 8, 11 und der beiden Zentrierrollen 9, 10 kann die Station 1 mit einem sehr geringen Zeitaufwand in ihrer Betriebsstellung am Maschinenbett 2 der Glasformmaschine positioniert werden.

An seinem der Station 1 zugeordneten Oberseitenabschnitt ist das Maschinenbett 2 der Glasformmaschine mit in zwei Reihen angeordneten Ausnehmungen 12 bis 19 ausgestaltet. Die vier in Figur 1 in der rechten Reihe vorgesehenen Ausnehmungen 12, 13, 14, 15 sind einem rechten Längsrandbereich der Unterseite der Station 1 zugeordnet, die in Figur 1 in der linken Reihe angeordneten Ausnehmungen 16, 17, 18, 19 sind einem in Figur 1 linken Längsrandbereich der Unterseite der Station 1 zugordnet.

In jeder dieser Ausnehmungen 12 bis 19 ist ein Lagerelement angeordnet, dass z.B. als Walzen-, Rollen- und/oder Zapfenlagerelement ausgebildet sein kann. Diese Lagerelemente sind in Figur 1 nicht dargestellt. Jedes dieser Lagerelemente ist innerhalb der ihm zugeordneten Ausnehmung 12 bis 19 mittels einer Verstellvorrichtung 20 zwischen einer Ruhestellung des Lagerelements, in der die Station 1 in ihrer Betriebsstellung mittels der beiden Führungsrollen 8, 11 und der beiden Zentrierrollen 9, 10 am Maschinenbett 2 der Glasformmaschine positioniert ist, und einer Betriebsstellung des Lagerelements, in der die Station 1 auf den Lagerelementen aus der Glasformmaschine herausnehmbar bzw. vom Maschinenbett 2 der Glasformmaschine abziehbar ist, verstellbar. Bei der Verstellbewegung aus ihrer Ruhestellung in die Betriebsstellung werden die Lagerelemente mittels der Verstellvorrichtung 20 soweit angehoben, dass sie um ca. 15 mm über die Oberfläche des Maschinenbetts 2 vorstehen. Auf den Lagerelementen kann die Station 1 dann in einfacher Weise aus der Glasformmaschine herausgezogen werden. Sobald eine neue bzw. eine als Ersatz dienende Station 1 auf den sich in ihrer Betriebsstellung befindenden Lagerelementen in ihre korrekte Positionierung am Maschinenbett 2 gebracht worden ist, können die Lagermittel mittels der Verstellvorrichtung 20 aus ihrer Betriebsstellung in ihre Ruhestellung verbracht werden, in der die Station 1 auf das Maschinenbett 2 der Glasformmaschine abgesenkt und mittels der beiden Führungsrollen 8, 11 und der beiden Zentrierrollen 9, 10 in ihrer Betriebsstellung am Maschinenbett 2 der Glasformmaschine positioniert ist.

Um eine möglichst gleichmäßige Verteilung der beim Herausnehmen und Einfügen der Station 1 in die Glasformmaschine zu gewährleisten, können die Ausnehmungen 12 bis 15 bzw. 16 bis 19 in ihrer Reihe gleich beabstandet zueinander angeordnet werden. Die Verstellvorrichtung 20 zum Anheben und zum Absenken der in den Ausnehmungen 12 bis 19 befindlichen Lagerelemente kann manuell betätigt werden. Des Weiteren ist es möglich, diese Verstellvorrichtung 20 elektrisch, pneumatisch oder hydraulisch anzutreiben. Hierbei ist ein automatischer Betrieb zu bevorzugen.

Zum Herausnehmen und Einfügen der Station 1 in die Glasformmaschine kann ein spezielles Tiefladefahrzeug eingesetzt werden, welches sowohl für das Herausziehen einer Station 1 als auch für das Einfügen einer Station 1 aus der bzw. in die Glasformmaschine geeignet ist.

Die Station 1 ist selbstverständlich in der Weise ausgestaltet, dass an ihr vorgesehene Bauteile, z.B. die Vorformen 5, die Fertigformen 6, der Inverter 7 etc. in einfacher Weise an der Station 1 repariert bzw. ausgetauscht werden können, wenn sich die Station 1 - räumlich entfernt von der Glasformmaschine - in einer Wartungs- oder Reparaturstätte befindet.

Die vorstehend geschilderte Station 1 für eine Glasformmaschine kann durch die an ihren Anschlüssen 4 vorgesehenen Schnellkupplungen innerhalb von Minuten vollständig von allen glasformmaschinenseitigen Versorgungsleitungen etc. abgetrennt bzw. abgekoppelt werden. Vor der Abtrennung bzw. Abkopplung wird die Station 1 abgeschaltet. Dann wird eine weiter unten eingehend beschriebene Spannvorrichtung 24, 25 gelöst, woraufhin die Station 1 mittels der in den Ausnehmungen 12 bis 19 vorhandenen, verstellbaren Lagerelemente in eine Position verbracht wird, in der sich die Station 1 ca. 15 mm oberhalb der Oberseite des Maschinenbetts 2 befindet. Danach kann die Station 1 mittels des speziellen Tiefladefahrzeugs aus der Glasformmaschine gezogen und beispielsweise in eine mechanische Werkstatt od.gl. gebracht werden. Dort wird die Station 1 dann umgebaut, repariert, mit neuen Bauteilen bestückt, wobei sie sich hierbei nicht in der Glasformmaschine befindet. Irgendwelche Verletzungsgefahren bestehen somit nicht. Auch für eine präventive Wartung od. dgl. kann die Station 1 aus der Glasformmaschine in die Werkstatt verbracht werden. Um den Weiterbetrieb der Glasformmaschine zu gewährleisten, ist es möglich, eine als Ersatzstation dienende andere Station 1 in die offene Position der Glasformmaschine einzufügen. Nachdem diese Station 1 auf den Lagerelementen mittels der beiden Führungsrollen 8, 11 und der beiden Zentrierrollen 9, 10 in ihre korrekte Position oberhalb des Maschinenbetts 2 verbracht ist, können die Lagerelemente in den Ausnehmungen 12 bis 19 mittels der Verstellvorrichtung 20 in ihre Ruhestellung verbracht werden. Die neu in die Glasformmaschine eingefügte Station 1 ist mittels der beiden Führungsrollen 8, 11 und der beiden Zentrierrollen 9, 10 in der Betriebsstellung der Station 1 positioniert. Im Anschluss wird die Station 1 dann noch mit Spannhebeln 24, 25 der Spannvorrichtung fixiert. Mittels der vorstehend beschriebenen Station 1 können die Ausfallzeiten von Glasformmaschinen erheblich gesenkt werden, da eine defekte Station 1 in einfacher Weise aus der Glasformmaschine entfernt werden kann, wobei eine als Ersatzstation fungierende funktionsfähige Station 1 mit geringem Aufwand in die Glasformmaschine eingefügt werden kann.

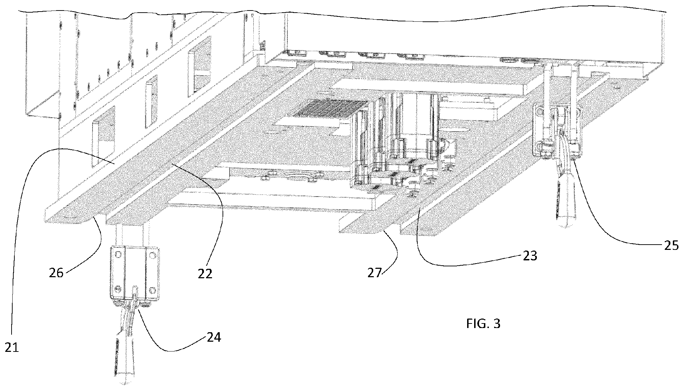

Die in den Figuren 3 und 4 mit ihrem Bodenbereich gezeigte Ausführungsform der erfindungsgemäßen Station 1 hat an der Unterseite ihrer Bodenplatte 21 zwei sich jeweils entlang der Station 1 in deren Einschub- und Herausziehrichtung erstreckende Längsnuten 22, 23. Diese Längsnuten 22, 23 sind bei der in Figur 3 gezeigten Ausführungsform der Station 1 in die Bodenplatte 21 eingefräst. In diesen Längsnuten 22, 23 sind die maschinenbettseitig gehalterten beiden Führungsrollen 8, 11 und beiden Zentrierrollen 9, 10, die zwischen der Glasformmaschine bzw. deren Maschinenbett 2 und der Station 1 angeordnet sind, aufnehmbar. Entsprechend wird die Station 1 sowohl beim Einschubvorgang als auch beim Herausziehvorgang exakt geführt. Darüber hinaus ist mittels der in Figur 4 gezeigten, in die Längsnuten 22, 23 eingreifenden beiden Führungsrollen 8, 11 und beiden Zentrierrollen 9, 10 sichergestellt, dass die Station 1 nach dem Einschubvorgang korrekt in der Glasmaschine bzw. in Bezug auf deren Maschinenbett 2 positioniert ist. Von den beiden Zentrierrollen 9, 10 ist in Figur 4 lediglich die Zentrierrolle 10 sichtbar.

Die beiden Längsnuten 22, 23 haben an ihrem zu Beginn des Einschubvorgangs der Station 1 mit den maschinenbettseitigen Führungsrollen 8, 11 und am Ende des Einschubvorgangs der Station 1 mit den maschinenbettseitigen Zentrierrollen 9, 10 in Anlage geratenden Eingängen jeweils einen sich in Einschubrichtung verjüngenden Eingangsabschnitt 26, 27. Der Beginn des Einschubvorgangs wird hierdurch erleichtert. Am Ende des Einschubvorgangs wird mittels der Zentrierrollen 9, 10, deren Durchmesser die Breite der Längsnuten 22, 23 überschreitet, eine exakte Positionierung der Station 1 am Maschinenbett 2 der Glasmaschine gesichert.

Die Station 1 ist mittels der am Maschinenbett 2 der Glasmaschine angeordneten und gehalterten Spannvorrichtung 24, 25, die die beiden Spannhebel 24, 25 aufweist, am Maschinenbett 2 befestigbar. Von den beiden Spannhebeln 24, 25 ist einer auf der Vorformseite der Station 1 und der andere auf deren Fertigformseite angeordnet. Bei der dargestellten Ausführungsform der Station 1 liegen die beiden Spannhebel 24, 25 einander diagonal gegenüber.

## Patentansprüche

1. Station für eine Glasformmaschine, insbesondere für eine IS- oder ISX-Glasformmaschine, mit stationsseitigen Anschlüssen (4), mittels denen die Station (1) an glasformmaschinenseitige Versorgungsleitungen od. dgl. anschließbar ist, **dadurch gekennzeichnet, dass** alle stationsseitigen Anschlüsse (4) mittels Schnellkupplungen von den ihnen zugeordneten Versorgungsleitungen od. dgl. abtrennbar sind und dass die Station (1) als Einheit aus der Glasformmaschine entnehmbar ist.

2. Station nach Anspruch 1, die mittels Führungsrollen (8, 11) und Zentrierrollen (9, 10) in ihrer Betriebsstellung an einem Maschinenbett (2) der Glasformmaschine positionierbar ist.

3. Station der Anspruch 1 oder 2, bei der zwischen der Station (1) und der Glasformmaschine Lagerelemente angeordnet sind, mittels denen die Station (1), vorzugsweise um ca. 15 mm, anhebbar und auf denen die Station (1) aus der Glasformmaschine herausziehbar ist.

4. Station nach Anspruch 3, bei der die Lagerelemente in Ausnehmungen (12 bis 19), die im Maschinenbett (2) der Glasformmaschine ausgebildet sind, sitzen und
oberhalb des glasformmaschinenseitigen Maschinenbetts (2) anordbar sind.

5. Station nach Anspruch 4, bei der die Lagerelemente in den Ausnehmungen (12 bis 19) des glasformmaschinenseitigen Maschinenbetts (2) zum Anheben und zum Absenken der Station (1) verstellbar sind.

6. Station nach Anspruch 5, bei der die Lagerelemente mittels einer angetriebenen Verstellvorrichtung (20) geregelt zwischen einer Ruhestellung, in der die Station (1) in deren Betriebsstellung an der Glasformmaschine verriegelbar ist, und einer Betriebsstellung, in der die Station (1) auf ihnen aus der Glasformmaschine herausnehmbar ist, verstellbar sind.

7. Station nach einem der Ansprüche 4 bis 6, bei der die Ausnehmungen (12 bis 15 bzw. 16 bis 19) im glasformmaschinenseitigen Maschinenbett (2) in zwei Reihen vorzugsweise gleich beabstandet zueinander angeordnet sind, von denen jede einem Längsrandbereich der Unterseite der Station (1) zugeordnet ist.

8. Station nach einem der Ansprüche 3 bis 7, bei der als Lagerelemente Walzen-, Rollen- und/oder Zapfenlagerelemente vorgesehen sind.

9. Station nach einem der Ansprüche 5, 7 und 8, bei der die Lagerelemente manuell verstellbar sind.

10. Station nach einem der Ansprüche 6 bis 8, bei der die Verstellvorrichtung (20) elektrisch, pneumatisch oder hydraulisch, vorzugsweise automatisch, antreibbar ist.

11. Station nach einem der Ansprüche 1 bis 10, die mit einer Transportvorrichtung verbindbar ist, mittels der sie aus der Glasformmaschine entnehm- bzw.
herausziehbar ist.

12. Station nach Anspruch 11, mittels deren vorzugsweise als spezielles Tiefladefahrzeug ausgebildeter Transportvorrichtung eine als Ersatz dienende andere Station (1) in die Glasformmaschine lad- und einfügbar ist.

13. Station nach einem der Ansprüche 1 bis 12, die außerhalb der Glasformmaschine reparier- und wartbar ist und deren Bauteile (6, 7, 8) außerhalb der Glasformmaschine auswechselbar sind.

14. Station nach einem der Ansprüche 2 bis 13, die an der Unterseite ihrer dem Maschinenbett (2) zugewandten Bodenplatte (21) zwei Längsnuten (22, 23) aufweist, in denen die am Maschinenbett (2) der Glasformmaschine gehalterten Führungsrollen (8, 11) und Zentrierrollen (9, 10) aufnehmbar sind.

15. Station nach einem der Ansprüche 1 bis 14, die mittels einer vorzugsweise am Maschinenbett (2) der Glasmaschine angeordneten Spannvorrichtung (24, 25) am Maschinenbett (2) befestigbar ist, die vorzugsweise zwei Spanneinheiten (24, 25) aufweist, von denen eine auf der Vorformseite der Station (1) und die andere auf deren Fertigformseite angeordnet ist und die einander vorzugsweise diametral gegenüber liegen.
